# EUROPEAN PATENT APPLICATION

(11) **EP 3 141 299 A1**
(43) Date of publication of application: **15.03.2017**
(21) Application number: 16187130.6
(22) Date of filing: 02.09.2016
(51) Int. Cl.: B01J 3/04, A61L 2/00

(54) **CYLINDER-SHAPED AUTOCLAVE WITH BALANCED PRESSURE COMPRISING A SEPARATING COMPARTMENT POSITIONED INSIDE**

(30) Priority: 07.09.2015 IT UB20153441
(71) Applicant: GHIZZONI D. S.R.L., 43121 Parma (IT)
(72) Inventor: GROSSE-ALLERMANN, Christian, 43121 Parma (IT)
(74) Representative: Benelli, Cristian

(57) **Abstract**

Cylinder-shaped autoclave comprising a light-in-structure separating compartment and preferably rectangular in shape, designed to host the baskets for the products to be processed. The separating compartment, lower in volume as compared to the cylinder-shaped autoclave and preferably rectangular in shape, reduces the volume to be heated and later cooled, with remarkable energy saving. Said compartment has a double worthiness in that it can be introduced and implemented in already existing autoclaves, besides being an integral part of those constructed ex-novo. When the process is activated, the pressure set ensures that the internal pressure inside the separating compartment is the same as the external pressure directed towards the supporting walls. By so doing, the compartment's structure is not affected by differing pressures. The above balance is made possible by means of at least one pressure sensor.

## Description

The autoclaves are machines where the internal pressure exceeds the external pressure and are normally in cylindrical shape with convex bottoms (with horizontal axis) so as to enhance the stability of the construction, with reduced thickness and weight of the same machinery as compared to a flat structure, having right angles.

The product is normally dry heated or heated in a humid environment.

The product is in most cases laid on one or more trolleys (some products stay in the autoclave by suspension) which are manually or automatically placed inside the autoclave with horizontal orientation. Once the hatch has been closed, the heating process can be performed until the operating temperature has been achieved, and kept constant for the process to be completed.

After this stage, the product is cooled by means of gas (dry process) or in a humid environment (by means of current or atomized water).

The above-mentioned trolleys/baskets are normally square or rectangular in shape: as a consequence, they can't occupy the whole space defined by the autoclave's inner volume. As a result, the maximum volume which can be occupied by the baskets is lower than the volume which can be reached with a corresponding cylinder-shaped element having the same length (ratio 1:1,6). This calculation does not account for the volume of the convex bottoms, which cannot be occupied by the baskets.

### SUMMARY OF THE INVENTION

A first scope of the present invention is to put to the disposal of engineering a separating rectangular compartment positioned inside a cylinder-shaped autoclave with balanced pressure.

The main benefit resulting from the presence of a separating compartment lower in volume and preferably rectangular in shape is that of reducing the volume to be heated and subsequently cooled, with remarkable energy saving.

Furthermore, the compartment as referred to the present invention, has a double worthiness in that it can be introduced and implemented in already existing autoclaves, besides being an integral part of those constructed ex-novo.

On top of all this, a further benefit of the present invention is to create an improved pressure autoclave, by means of a solution meant to rationalize the spaces in relationship with the process taking place inside it.

Such and other scopes are achieved thanks to the invention's characteristics as referred to in the independent and dependent claims that highlight the invention's preferred and/or particularly cost-effective benefits.

In particular, one of the ways of implementing the present invention provides for a compartment inside an autoclave, light in structure and preferably rectangular in shape; the compartment is designed to host the baskets of the products to be processed.

When the process activated, the pressure set ensures that the internal pressure inside the separating compartment is the same as the external pressure directed towards the supporting walls. By so doing, the compartment's structure is not affected by differing pressures.

The above balance is made possible by means of either two pressure sensors positioned in the compartment as well as in the remaining part of the autoclave or of a connected manifold between the separating compartment and the remaining part of the autoclave.

The pressure to be obtained is preferably reached regulated with compressed air and blow-off. To avoid damages to the separating compartment in the event of malfunction or irregularities in the handling of the pressures, as soon as the two pressure levels are not the same, two unidirectional valves opening respectively towards the internal part and towards the external part should be positioned.

Another invention's benefit is that, since the heating is contained in the separating compartment, the structure's wall is not heated as in the traditional system. As a result, the external wall can be constructed in a different material, provided that it withstands the operating pressure.

Another invention's benefit is that of making it possible to place the electric motors inside the autoclave, thus avoiding important holes in the external structure.

Furthermore, it is possible to reduce the quantity of compressed air injected to handle the pressure; to this respect, to fill the area between the compartment and the supporting wall, it is provided for the use of either liquid or solid filling material, which can also be used as insulating material.

Another benefit is to reduce time to reach the desired temperature as well for the heating as for the cooling phase.

Another benefit is given by the fact that the separating compartment, which can be implemented in already existing machines, doesn't need holes in the external structure for additional welds, thus simplifying the homologation of the equipment.

The above-listed scopes and benefits can all be reached by positioning the new compartment, as per the present invention, in the autoclave, as described in the below-mentioned claims.

### SHORT DESCRIPTIONS OF THE DRAWINGS

The present and other characteristics will be better highlighted thanks to the following description of some ways of implementation, including but not limited to the enclosed technical drawings.
- Drawing 1: illustrates an autoclave's perspective view with open hatch and view of the mouth of the separating compartment
- Drawing 2: illustrates an autoclave's side view as per drawing 1

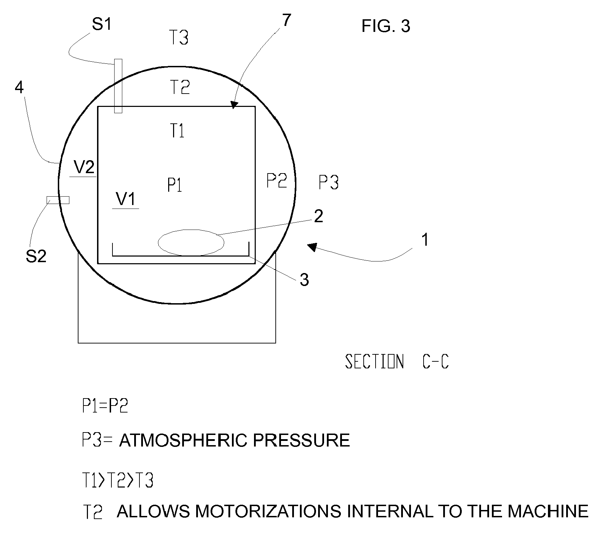

- Drawing 3: illustrates an autoclave's C-C section as per drawing 2.

### DESCRIPTION OF THE INVENTION

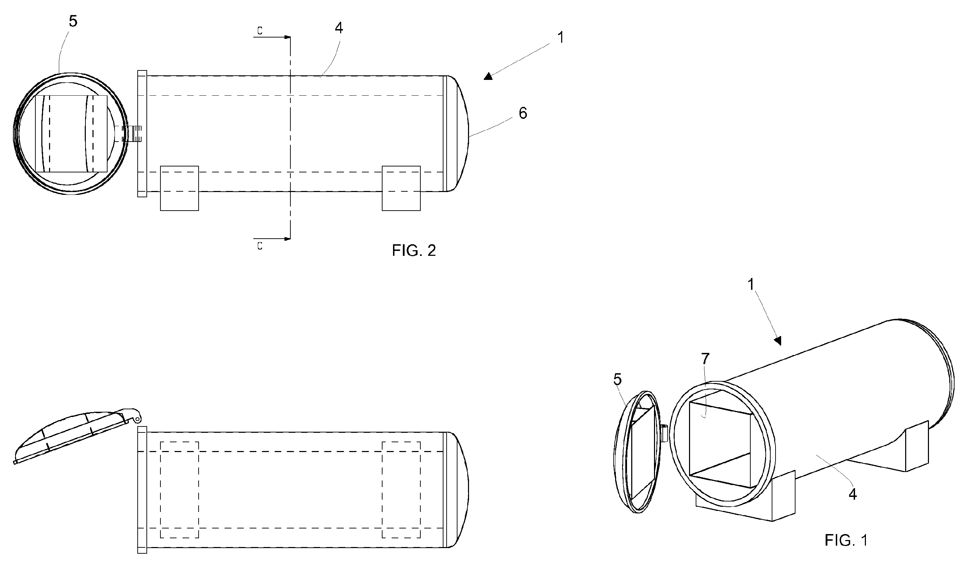

With particular reference to the drawings, drawing 1 refers to an autoclave in pressure in its complex view.

The autoclave is used for the heat treatment of the products 2.

The products 2 are introduced in baskets or trays 3 and then placed inside the autoclave.

The autoclave 1 is normally a cylinder-shape external structural container 4.

Container 4 is generally closed by two bases or bottoms 5 e 6; the latter are preferably convex. The one indicated with reference number 5 is also used as opening and closing hatch.

The invention also provides for the placement of an additional separating compartment 7 inside the autoclave, that is to say, inside the container 4.

The separating compartment 7 is preferably rectangular in shape, with flat walls. The separating compartment 7 has thin walls.

Compartment 7 can be closed and placed inside the above structural container 4, so as to host 2 baskets or trays 3 with the products 2 to be processed.

As a result, the separating compartment 7 defines an additional space V1 lower in volume as compared to V2, which is the whole volume inside container 4.

The above indicated volumes V1 and V2 inside the autoclave are monitored to ensure that their respective pressures remain the same.

A first practical example of what has just been said is made possible by means of two pressure sensors, S1, S2, present inside the autoclave.

The above mentioned sensors S1 and S2 are respectively placed inside the volume of separating compartment 7 and in the remaining part of the autoclave's volume V2.

The above sensors S1 and S2 are designed to register the pressure of the respective spaces V1 and V2 and to inform about said values to a control element. Said control element maintains the internal pressure P1 inside volume V1 of the separating compartment 7 equal to that of P2 of volume V2 in the remaining part of autoclave 1.

Another possible way of realization, aimed at establishing an equal pressure in the compartments V1, V2, is that of providing for a connecting conduit between the two.

To ensure that the pressure is balanced, under any circumstance, between the separating compartment and the remaining part of the autoclave, the separating compartment is also equipped with two unidirectional valves opening respectively towards the internal and the external part of the same, as soon as the two pressure levels are not the same.

The autoclave is also designed to host filler and insulating material to be placed in volume V2 between the separating compartment and the container 4.

The above volumes V1 and V2 inside the autoclave are monitored so that the respective pressures P1 and P2 are maintained equal; said monitoring is carried out in alternative by at least two pressure sensors S1, S2 and by the control element, or by a connecting conductor, which makes said compartments V1, V2 able to to communicate with one another.

## Claims

1. Autoclave (1) in pressure for carrying out a heat treatment of products (2) placed in baskets or trays (3) inside; the autoclave (1) including a first structural external container (4) cylindrical in shape with preferably convex bottoms (5, 6) of which one (5) is used as opening and closing hatch; wherein the autoclave comprises:
- A separating compartment (7), which can be hermetically closed and placed inside said structural container (4) designed to host the baskets or trays (3) of the products (2) to be processed; said separating compartment (7) is designed to define a space (V1) lower in volume than (V2) inside the container (4).

2. Autoclave as per claim 1, whereby, in the above two volumes (V1) (V2) inside the autoclave, their respective pressures (P1) and (P2) are maintained equal by means of two pressure sensors (Sl, S2) and control element; said pressure sensors (Sl, S2) respectively placed inside volume (V1) of the separating compartment (7) and in the remaining part (V2) of the autoclave (1); said sensors (Sl, S2) designed to register the pressure (P1, P2) of the respective spaces and inform about said values to said control element; said control element maintains the internal pressure (P1) of the separating compartment (7) equal to that of (P2) in the remaining part of the autoclave (1).

3. The autoclave as per claim 1, whereby in the above-mentioned two volumes (V1) and (V2) inside the autoclave, their respective pressures (P1) e (P2) are maintained equal by means of a conductor that connects the above compartments (V1, V2).

4. The autoclave (1) as per claim 1, whereby the separating compartment (7) is placed inside the autoclave in such a way that the opening for the loading of the trays (3) is by the side of the hatch (5) and is positioned in such a way that it can be closed either separately or together with the same closing of the hatch (5).

5. The autoclave (1) as per claim 1, whereby the separating compartment (7) is rectangular in structure, with preferably flat walls.

6. The autoclave (1) as per claim 1, whereby the separating compartment (7) features thin walls.

7. The autoclave (1) as per claim 1, which partially or wholly includes filler and insulating material placed in volume (V2) between the separating compartment and the container (4).

8. The autoclave (1) as per claim 1, whereby it includes no less than two unidirectional valves which can be opened respectively towards the inside or the outside of the separating compartment.

9. A separating compartment (7), which can be placed inside a cylinder-shaped autoclave (1) with balanced pressure, the compartment (7) designed to host the baskets or the trays (3) of the products (2) to be processed; said separating compartment (7) designed to define a space (V1) of lower volume than the one (V2) inside the container (4).

10. A separating compartment as per claim 9, whereby it includes no less than two unidirectional valves which can be opened respectively towards the inside or the outside of the same compartment.

11. Method of products treatment in autoclave, said autoclave defined by a container (4); the method comprising the step of:
o Placing the products in an additional separating compartment (7) designed to host the baskets or the trays (3) of the products (2) to be processed, and where the separating compartment (7) defines an additional space (V1) lower in volume as compared to (V2), which is the whole volume inside container (4)
o Closing the compartments (4, 7),
o Applying a thermal treatment within said additional compartment (7),
o Monitoring and maintaining equal pressures the respective pressures (P1) and (P2) of said volumes (V1, V2).
